# EUROPEAN PATENT SPECIFICATION

(11) **EP 3 066 374 B1**
(45) Date of publication and mention of the grant of the patent: **12.02.2025**
(21) Application number: 14796855.6
(22) Date of filing: 04.11.2014
(51) Int. Cl.: F16L 11/08, F16L 17/10, F16L 33/01

(54) **FLUID COMMUNICATION**
FLUIDVERBINDUNG
COMMUNICATION FLUIDIQUE

(30) Priority: 08.11.2013 GB 201319758
(43) Date of publication of application: 14.09.2016
(73) Proprietor: Baker Hughes Energy Technology UK Limited, Bristol BS48 1BS (GB)
(72) Inventor: ROBERTS, Andrew Peter, Newcastle-upon-Tyne Tyne and Wear NE6 3PF (GB); DUFFELL, Christopher James, Newcastle-upon-Tyne Tyne and Wear NE6 3PF (GB); BALDWIN, Laurence James, Newcastle-upon-Tyne Tyne and Wear NE6 3PF (GB)
(74) Representative: Novagraaf Group
(86) International application number: PCT/GB2014/053267
(87) International publication number: WO 2015/067928

(56) References cited:
- EP-A2- 1 077 343
- WO-A1-00/17479
- WO-A2-2008/053142
- WO-A2-2013/005000
- FR-A1- 2 816 389

## Description

The present invention relates to a flexible pipe and a method of manufacturing a flexible pipe of a type which may be used to convey the production fluids associated with the oil and gas industry. In particular, but not exclusively, the present invention relates to a flexible pipe which includes an end fitting in which a fluid communication passageway is provided to connect a local hydrostatic pressure provided by nearby seawater to a region within the end fitting. This enables a differential pressure approach to be used to specify a structural design of the flexible pipe.

Traditionally, flexible pipe is utilised to transport production fluids, such as oil and/or gas and/or water, from one location to another. Flexible pipe is particularly useful in connecting a subsea location to a further subsea location or a sea level location. Flexible pipe is generally formed as an assembly of a segment of flexible pipe body and one or more end fittings in which respective ends of the flexible pipe body are terminated. The pipe body is typically formed as a composite of tubular layers of material that form a fluid and pressure containing conduit. The pipe structure allows large deflections without causing bending stresses that impair the pipe's functionality over a desired lifetime. The pipe body is generally, but not necessarily, built up as a composite structure including metallic and polymer layers. Flexible pipe may be utilised as a flowline overland and/or at a subsea location. Flexible pipe may also be used as a jumper or riser.

It is known that when flexible pipes are designed the environmental factors which the flexible pipe is to experience over its service life are taken into account so that the flexible pipe hopefully functions in use without failure. A typical service lifetime is twenty years or more and some flexible pipes are utilised in deep or indeed ultra-deep water conditions where many kilometres of overlying seawater can be expected to continually apply a high pressure crushing force on an external part of flexible pipe body or an end fitting. Such high pressures can easily reach 20684.27 kPa (3000 psi) or more.

Likewise an internal bore in a flexible pipe which is used to transport production fluids can continuously experience very high pressures of up to more than 137895.15 kPa (20,000 psi) or more. These considerable pressures, and the timeframes over which such pressures must be withstood, mean that designing and manufacturing flexible pipe involves the use of materials and manufacturing processes which are complex and costly to implement.

Still furthermore because flexible pipes are difficult to replace after being installed at a subsea location, any design of a flexible pipe usually involves an overestimation of environmental conditions which could be experienced by the flexible pipe. Effectively considerable in-built redundancy must be designed in to minimise risk of failure. Detailed and rigorous testing procedures are in place which must be qualified by any flexible pipe prior to being put in service. For example API standard 17J (ISO 13628-2) defines a design pressure which is a maximum internal pressure expected to be experienced by a flexible pipe. A factory acceptance test (FAT) which must be passed by a flexible pipe requires that a test pressure of 1.5 x this design pressure must be applied to a flexible pipe during testing after manufacture to test for latent defects. It is noted that the 1.5 x design pressure threshold is allocated for flexible pipes destined to be used as flexible risers and topside jumpers whilst 1.3 x the design pressure is specified for flexible flowlines and subsea jumpers. In any event the 1.5 or 1.3 x factor when applied to pressures which are already expected to be considerable means that testing pressures applied to flexible pipe during qualification can be very significant and as a result very costly and complex design and manufacturing is needed to create a pipe that will pass such tests.

It is also known that during manufacturing of a particular flexible pipe seal rings are utilised in an end fitting to help terminate an end of the flexible pipe body of that pipe. During manufacture from time to time it is desirable to be able to test to see if successful sealing has been achieved when the sealing elements are energised or thereafter. Conventional testing methods are complex and prone to user error and can require bespoke test ports and test passageways to be included in a design which become redundant subsequent to testing.

It is also known that from time to time flexible pipes are manufactured which are not immediately put into service but can instead be stored for some time prior to installation at a desired location. Sometimes the length of time of such storage can be a few months or even years. Subsequent to a period of storage it is preferable (and in some cases essential) to be able to test whether any failure of any sealing mechanisms has occurred during storage. This is preferable to putting the pipe in service and then finding out about a failure. Conventionally there has been little or no solution to this other than putting the flexible pipe into service and monitoring for failure or alternatively running a complicated hydro test process. This can of course be a costly and time consuming process to rectify if a failure occurs.

WO2008053142 discloses a method and apparatus for testing the integrity of a portion of flexible pipe body.

It is an aim of the present invention to at least partly mitigate the above-mentioned problems.

It is an aim of certain embodiments of the present invention to provide a way in which a design differential pressure can be utilised during a design process for a flexible pipe.

It is an aim of certain embodiments of the present invention to enable a smaller and lighter structure of a flexible pipe and end fitting to be provided for any given internal design pressure.

It is an aim of certain embodiments of the present invention to provide a flexible pipe in which at least one pressure resistant fluid communication passageway is constantly provided between at least one external port which experiences local high hydrostatic or test pressure and a location or multiple locations between spaced apart seals in an end fitting.

It in an aim of certain embodiments of the present invention to provide a method of transporting production fluids in which a local hydrostatic or test pressure can constantly be communicated between key structural elements of an end fitting and flexible pipe located at a subsea location.

It is an aim of certain embodiments of the present invention to provide a method and apparatus for communicating a high local hydrostatic pressure to an internal region of an end fitting as desired and to automatically release high pressure at an internal location of an end fitting whilst the end fitting is submerged in a body of seawater as the end fitting is lifted towards the surface of the body of seawater.

According to a first aspect of the present invention there is provided an end fitting for a flexible pipe for transporting production fluids, comprising:
an end fitting body comprising a first end region that provides an end fitting connector and a further end region that provides an open mouth for receiving a flexible pipe body end; and
an end fitting jacket secured to the end fitting body; wherein
the end fitting body further comprises at least one external port of the end fitting located on an outwardly facing surface of the end fitting body for receiving a local hydrostatic pressure exerted by a surrounding body of seawater in use, at least one corresponding inner port located on an inwardly facing surface of the end fitting body and a corresponding fluid communication passageway, pressure resistant to at least about around 9652.67 kPa (1400 psi), extending between the external port and the inner port for communicating pressure between said external port and said inner port, wherein said fluid communication passageway comprises at least one lumen connected between a first bore in the end fitting body extending between a first lumen end and the inner port, and a further bore in the end fitting body extending between a further lumen end and the external port, said inner port being located at a location between a pair of spaced apart seal elements sealed against at least one internal fluid retaining layer of a flexible pipe body wherein the first bore extends radially outwardly from an inner surface of the end fitting body to an outer surface of the end fitting body that faces an inside of the jacket.

Aptly said external port is located to receive a local hydrostatic pressure in use when an end of a segment of flexible pipe body is terminated in the end fitting and submerged in a body of seawater.

Aptly the passageway comprises a bore through the end fitting body between the outer and inner ports.

Aptly the passageway comprises at least one lumen connected between a first bore in the end fitting body, extending between a first lumen end and the inner port, and a further bore in the end fitting body extending between a further lumen end and the external port.

Aptly the lumen is at least partially filled with a pressure communicating fluid.

Aptly the communicating fluid is a grease or hydraulic oil.

Aptly the lumen is a metal pressure resistant tube.

Aptly the tube is pressure resistant to about around 20684.27 kPa (3000 psi) or more.

Aptly the tube is pressure resistant to about around 27579.03 kPa (4000 psi) or more.

Aptly the tube is pressure resistant to about around 34473.77 kPa (5000 psi) or more.

Aptly the external port comprises a gas vent port.

Aptly the external port comprises a filter element.

Aptly the external port is always open to constantly communicate local hydrostatic pressure to the inner port.

Aptly said at least one external port, at least one corresponding inner port and corresponding fluid communication passageway, comprises:
at least one external inlet port, in fluid communication with a corresponding inner port via a corresponding inlet passageway, that selectively permits fluid at a local pressure to enter the inlet port from outside the end fitting; and
at least one external exit port, in fluid communication with a corresponding inner port via a corresponding exit passageway, that selectively permits fluid at an internal pressure to exit the exit port from said a location.

Aptly the end fitting further comprises:
a one way inlet valve at each external inlet port for selectively opening when a local pressure at the external inlet port is at a first predetermined threshold pressure; and
a one way exit valve at each external exit port for selectively opening when a local pressure at the external exit port is at a second predetermined threshold pressure.

Aptly the end fitting further comprises:
a plurality of seal ring elements for sealing against at least one internal fluid retaining layer of the flexible pipe body.

According to a second aspect of the present invention there is provided a flexible pipe for transporting production fluids, comprising:
a segment of flexible pipe body comprising a first pipe body end and a further pipe body end; and
at least one end fitting as claimed in any one of claims 1 to 3.

Aptly the fluid communication passageway comprises a lumen having pressure resistant walls for communicating pressure up to about around 20684.27 kPa (3000 psi) or more to or from said a location.

Aptly the at least one internal fluid retaining layer is a barrier layer or liner of the flexible pipe body.

Aptly the at least one internal fluid retaining layer is an intermediate layer between a barrier layer or liner and an outer sheath of the flexible pipe body.

Aptly the at least one internal fluid retaining layer comprises a barrier layer or liner and an intermediate layer configured between the barrier layer or liner and an outer sheath of the flexible pipe body.

Aptly each seal element is an annular seal ring having a cross-section comprising a seal ring body and a sealing lip extending from the seal ring body.

Aptly the seal rings are arranged in a spaced apart coaxial and commonly facing configuration.

Aptly each seal element is a sealing lip extending in opposed directions in a back-to-back relationship from a shared body region of an annular seal ring.

Aptly the flexible pipe further comprises a respective valve for selectively opening and closing each external port.

Aptly each valve is a one way valve.

Aptly each valve comprises an always open valve.

Aptly the at least one external port and corresponding fluid communication passageway further comprises:
at least one external inlet port, and a corresponding inlet passageway, that selectively permits fluid at a local pressure to enter the inlet port from outside the end fitting; and
at least one external exit port, and a corresponding exit passageway, that selectively permits fluid at an internal pressure to exit the exit port from said a location.

Aptly the flexible pipe further comprises:
a one way inlet valve at each inlet port for selectively opening when a local pressure at the inlet port is at a first predetermined threshold pressure; and
a one way exit valve at each exit port for selectively opening when a local pressure at the exit port is at a second predetermined threshold.

Aptly the flexible pipe further comprises:
a pressure communicating material at least partially filling at least one fluid communication passageway.

According to a third aspect of the present invention there is provided a method of testing at least one seal in an end fitting, as described in the first aspect of the invention, of a flexible pipe, comprising the steps of:
subsequent to at least one of a first and further pipe body end of a segment of flexible pipe body being terminated in a respective end fitting comprising an end fitting body and an end fitting jacket secured to the end fitting body, applying a test pressure at at least one external port of at least one end fitting; and
communicating the test pressure, via a fluid communication passageway that is pressure resistant to at least about around 9652.67 kPa (1400 psi), from said external port to an inner port located at a location between a pair of spaced apart seal elements sealed against at least one internal fluid retaining layer of the flexible pipe, said fluid communication passageway comprising at least one lumen connected between a first bore in an end fitting body extending between a first lumen end and said inner port, and a further bore in the end fitting body extending between a further lumen end and said external port, wherein the first bore extends radially outwardly from an inner surface of the end fitting body to an outer surface of the end fitting body that faces an inside of the jacket.

Aptly the method further comprises testing seal integrity of a seal provided by said seal elements during onshore storage of the flexible pipe.

Aptly the method further comprises testing seal integrity of a seal provided by said seal elements immediately subsequent to completion of end fitting assembly.

Aptly the method further comprises simultaneously testing seal integrity of a primary seal ring and a secondary seal ring, respectively comprising the spaced apart seal elements, sealed against a common internal layer or different internal layers of the flexible pipe.

Aptly the method further comprises applying the test pressure by providing a test fluid at a test pressure, from a test fluid source, at said external port.

Aptly the method further comprises, subsequent to the application of a test pressure, monitoring pressure at said external port over a pre-determined period of time.

Aptly the method further comprises applying the test pressure to said a location via at least one inlet valve of an external inlet port of the end fitting.

Aptly the method further comprises subsequently releasing test pressure from said a location via at least one exit valve of an external exit port of the end fitting.

Also disclosed is a method of transporting production fluids via a flexible pipe, comprising the steps of:
during transport of production fluids along an inner bore of a flexible pipe defined by an inner fluid retaining layer, continually communicating a local hydrostatic pressure to a location between a pair of spaced apart seal elements sealed against a radially outer surface of the inner fluid retaining layer and/or a location between a pair of spaced apart seal elements sealed against a radially outer surface of an intermediate fluid retaining layer disposed between the inner fluid retaining layer and an outer sheath layer.

Also disclosed is a method of transporting production fluids via a flexible pipe, comprising the steps of:
during transport of production fluids along an inner bore of a flexible pipe defined by an inner fluid retaining layer, continually communicating a local hydrostatic pressure to a location between a pair of spaced apart seal elements respectively sealed against a radially outer surface of the inner fluid retaining layer and against a radially outer surface of a radially outer polymer layer disposed between the inner fluid retaining layer and an outer sheath layer respectively.

Aptly the method further comprises the steps of:
communicating the local hydrostatic pressure by applying the hydrostatic pressure via a body of seawater to an external port of an end fitting of the flexible pipe; and communicating the local hydrostatic pressure from the external port to said a location via a fluid communication passageway that is pressure resistant to at least about around 1400 psi.

Certain embodiments of the present invention enable a differential pressure approach to be taken when a flexible pipe is designed and manufactured for submerged applications. This can be used to specify the structural design of a flexible pipe (i.e. the difference between the external pressure and the internal pressure is used to calculate a net force acting on the pipe structure).

For deep and ultra deep water applications where a significant external hydrostatic pressure is expected this approach can allow a smaller, lighter structure to be provided for any given internal design pressure than would otherwise conventionally be permitted. This benefits both material usage and logistics and ultimately overall project costs.

It is to be noted that for a sealing mechanism within an end fitting of a traditional/ conventional structure such a differential pressure approach is not possible as the seal sits within a pipe annulus region. The external hydrostatic force is therefore not directly applied to a seal ring unless there has been a failure of an outer sheath. It will be appreciated that conventionally in such a situation any internal metallic layers would be subject to local corrosion with a corresponding reduction of the serviceable life of the product.

Certain embodiments of the present invention utilise a double seal arrangement whereby a first seal prevents pressure release from a bore of a pipe and a secondary seal allows reverse testing of the primary seal and/or allows a local hydrostatic pressure to be applied to a side of the primary seal without necessarily flooding an annulus region of the flexible pipe.

Certain embodiments of the present invention allow for nitrogen testing of a sealing mechanism at any time during manufacture or subsequent to a period of onshore storage. This negates the need for filling a pipe with water etc. to complete a full hydro test. Testing can also validate both internal pressure (of a primary seal) and external pressure (a secondary seal) integrity.

Certain embodiments of the present invention also provide the advantage that by allowing free flooding of a port during installation a primary seal will see a differential pressure only across the seal whilst a secondary seal will prevent annulus flooding by resisting the hydrostatic head.

Certain embodiments of the present invention provide for the automatic opening of a fluid communication passageway in an end fitting when a flexible pipe including the end fitting is submerged beyond a predetermined depth. The fact that a local hydrostatic pressure is always communicated to a desired location in use means that a differential pressure approach can be taken when the flexible pipe is designed and manufactured. Likewise an accumulated high pressure in a region of an end fitting can automatically be released as a flexible pipe including the end fitting are lifted towards a surface region subsequent to a period of use. This helps avoid harm to users.

Certain embodiments of the present invention will now be described hereinafter, by way of example only, with reference to the accompanying drawings in which:
Figure 1 illustrates flexible pipe body;
Figure 2 illustrates use of flexible pipe;
Figure 3A illustrates how an end of flexible pipe body can be terminated in an end fitting;
Figure 3B illustrates an alternative way in which an end of flexible pipe body can be terminated in an end fitting;
Figure 4 illustrates an alternative way in which an end of flexible pipe body can be terminated in an end fitting;
Figure 5 illustrates an inlet port and corresponding fluid inlet passageway used to provide local hydrostatic pressure at an internal region of an end fitting:
Figure 6 illustrates an exit port and corresponding fluid exit passageway used to permit fluid, at a relatively high internal pressure, to be released from an internal region of an end fitting; and
Figure 7 illustrates external ports on an outer surface of an end fitting.

In the drawings like reference numerals refer to like parts.

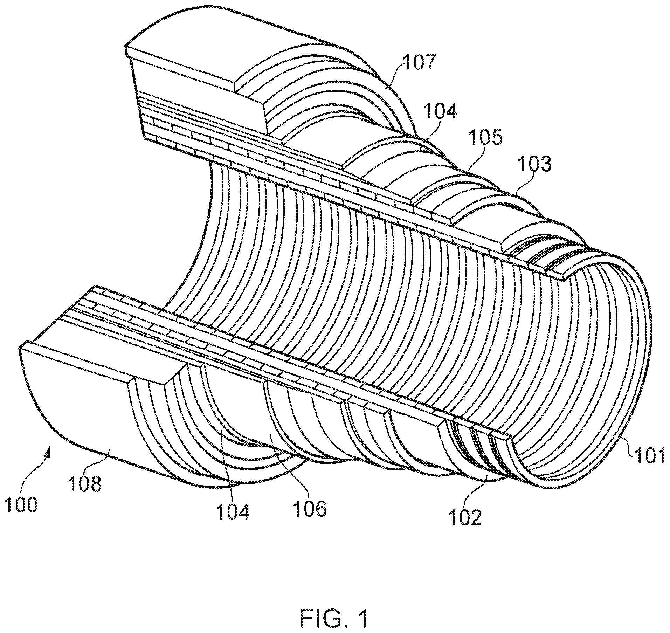

Throughout this description, reference will be made to a flexible pipe. It will be understood that a flexible pipe is an assembly of a portion of pipe body and one or more end fittings in each of which a respective end of the pipe body is terminated. Figure 1 illustrates how a portion of pipe body 100 (referred to as a segment) is formed from a combination of layered materials that form a pressure-containing conduit. Although a number of particular layers are illustrated in Figure 1, it is to be understood that the present invention is broadly applicable to coaxial pipe body structures including one or more layers manufactured from a variety of possible materials. For example, the pipe body may be formed from metallic layers, composite layers, or a combination of different materials. It is also to be further noted that the layer thicknesses are shown for illustrative purposes only.

As illustrated in Figure 1, the pipe body includes an optional innermost carcass layer 101. The carcass provides an interlocked construction that can be used as the innermost layer to prevent, totally or partially, collapse of an internal pressure sheath 102 due to pipe decompression, external pressure, and/or tensile armour pressure and mechanical crushing loads. The carcass layer may be a metallic layer, formed from carbon steel or the like, for example. The carcass layer may also be formed from composite, polymer, or other material, or a combination of materials. It will be appreciated that certain embodiments of the present invention are applicable to 'smooth bore' operations (i.e. without a carcass) as well as such 'rough bore' applications (with a carcass).

The internal pressure sheath 102 acts as a fluid retaining layer and comprises a polymer layer that ensures internal fluid integrity. It is to be understood that this layer may itself comprise a number of sub-layers. It will be appreciated that when the optional carcass layer is utilised the internal pressure sheath may be referred to by those skilled in the art as a barrier layer. In operation without such a carcass the internal pressure sheath may be referred to as a liner.

The pressure armour layer 103 is a structural layer with elements having a lay angle close to 90° that increases the resistance of the flexible pipe to internal and external pressure and mechanical crushing loads. The layer also structurally supports the internal pressure sheath, and is an interlocked construction of wires wound with a lay angle close to 90°.

The flexible pipe body also includes an optional first tensile armour layer 105 and optional second tensile armour layer 106. Each tensile armour layer is used to sustain tensile loads and internal pressure. The tensile armour layer may be formed from a plurality of metallic wires (to impart strength to the layer) that are located over an inner layer and are helically wound along the length of the pipe at a lay angle typically between about 10° to 55°. The tensile armour layers may be counter-wound in pairs. The tensile armour layers may be metallic layers, formed from carbon steel, for example. The tensile armour layers may also be formed from composite, polymer, or other material, or a combination of materials.

The flexible pipe body shown also includes optional layers 104 of tape which each help contain underlying layers and may act as a sacrificial wear layer to help prevent abrasion between adjacent layers.

The flexible pipe body also includes optional layers of insulation 107 and an outer sheath 108, which comprises a polymer layer used to help protect the pipe against penetration of seawater and other external environments, corrosion, abrasion and mechanical damage.

Each flexible pipe thus comprises at least one segment of pipe body 100 together with an end fitting located at at least one end of the flexible pipe. An end fitting provides a mechanical device which forms the transition between the flexible pipe body and a connector. The different pipe layers as shown, for example, in Figure 1, are terminated in the end fitting in such a way as to transfer the load between the flexible pipe and the connector.

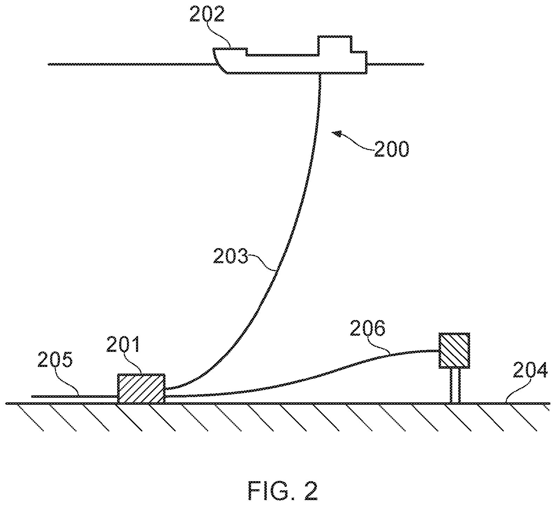

Figure 2 illustrates a riser assembly 200 suitable for transporting production fluids such as oil and/or gas and/or water from a subsea location 201 to a floating facility 202. For example, in Figure 2 the subsea location 201 includes an end of a subsea flowline. The flexible flowline 205 comprises a flexible pipe, wholly or in part, resting on the sea floor 204 or buried below the sea floor and used in a static application. The floating facility may be provided by a platform and/or buoy or, as illustrated in Figure 2, a ship. The riser assembly 200 is provided as a flexible riser, that is to say a flexible pipe 203 connecting the ship to the sea floor installation. The flexible pipeline may be formed from a single segment or multiple segments of flexible pipe body with end fittings connected end-to-end.

It will be appreciated that there are different types of riser, as is well-known by those skilled in the art. Certain embodiments of the present invention may be used with any type of riser, such as a freely suspended riser (free, catenary riser), a riser restrained to some extent (buoys, chains) or totally restrained riser. Certain other embodiments of the present invention can be used as flowlines or jumpers or the like and also with hybrid pipe structures including sections of flexible pipe and rigid pipe.

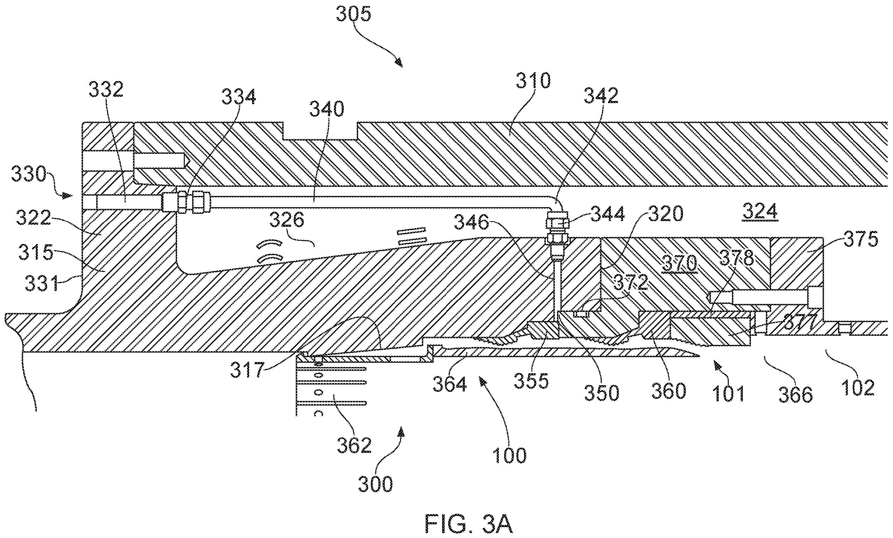

Figure 3A illustrates how an end 300 of a segment of flexible pipe body 100 is terminated in an end fitting 305. As illustrated in Figure 3A the end fitting 305 includes an end fitting jacket 310 which is securable to an end fitting body 315. The end fitting body 315 is a unitary piece which has a first end region that defines an open mouth in which the end 300 of the flexible pipe body is received. As illustrated in Figure 3A an inner surface 317 of the end fitting body 315 has a stepped cross section which generally widens towards a pipe facing end 320 of the end fitting body 315. The inner surface faces layers of the flexible pipe body when the pipe body is terminated in the end fitting. An outer surface of the end fitting body 315 extends from the pipe facing and open mouthed end 320 of the end fitting body to a flange 322 which extends radially outwardly from a central region of the end fitting body 315. The flange part 322 of the end fitting body is secured to an end of the jacket 310 by conventional techniques (such as bolts or threaded connections or the like). When so secured a space 324 is provided between the jacket and the end fitting body 315 in which armour wires 326 of the flexible pipe body can be terminated. Aptly the space 324 is filled with an epoxy during a manufacturing step during which flexible pipe body is terminated in the end fitting 305. As illustrated in Figure 3A an external port 330 is provided on an outwardly facing surface 331 of the end fitting body. The outwardly facing surface is a part of the end fitting that experiences local hydrostatic pressure in use. Other such surfaces are the outer cylindrical surface and end fitting connector (not shown) at the remaining end region of the end fitting body. A test pressure may optionally be applied locally at the external port prior to use of the pipe. A through bore 332 extends through the flange part 322 of the end fitting body to a tube connector 334 which connects a further end of the bore 332 that is spaced apart from the port 330 to a pressure resistant tube 340. The pressure resistant tube 340 helps provide a passageway that is collapse and burst resistant at high pressures. That is to say when fluid at high pressure is in the tube 340 the walls of the tube do not collapse or burst. Likewise the bores in the end fitting body do not collapse or burst. Aptly the tube is a stainless steel tube. Aptly the tube is manufactured using corrosion resistant material. Aptly the bores in the end fitting body are lined or clad with a corrosion resistant material. Aptly the walls of the tube 340 are pressure resistant to a pressure of 9652.66 kPa (1400 psi) or more. Aptly the walls of the tube 340 are pressure resistant to a pressure of 20684.27 kPa (3000 psi) or more. Aptly the walls of the tube 340 are pressure resistant to a pressure of 27579.03 kPa (4000 psi) or more. Aptly the walls of the tube 340 are pressure resistant to a pressure of 34473.79 kPa (5000 psi) or more.

A further end 342 of the tube is connected to a further tube connector 344 which connects the tube to an end of another bore 346 through the end fitting body. This bore 346 extends radially outwardly from the inner surface of the end fitting body 315 to an outer surface of the end fitting body that faces the inside of the jacket.

A remaining end of the bore 346 through the end fitting body 315 near the open mouthed end 320 defines an inner port 350. This inner port 350 is located at a position between a primary seal ring 355 and secondary seal ring 360 which seal against a fluid retaining layer of the flexible pipe body.

During a termination process in which an end of a segment of flexible pipe body is terminated in the end fitting 305 a carcass latch ring 362 and inner sleeve 364 are located with respect to a carcass 101, sacrificial layer 366 and a barrier layer 102. The seal rings 355, 360 thus bear on a radially outer surface of the barrier layer 102. During the termination process the primary seal 355 is energised against the outer surface of the barrier layer 102 by securing an inner collar member 370 against the end 320 of the end fitting body 315. An "O" ring 372 helps create a seal at an interface between the inner collar member 370 and the end fitting body 315. Subsequently the secondary seal ring 360 is energised by securing a pressure armour collar 375 to the inner collar member 370 which action urges a pressure armour termination ring 377 and corresponding spacer ring 378 against an abutment end of the secondary seal ring 360. This process urges the secondary seal ring 360 against the outer surface of the barrier layer 102.

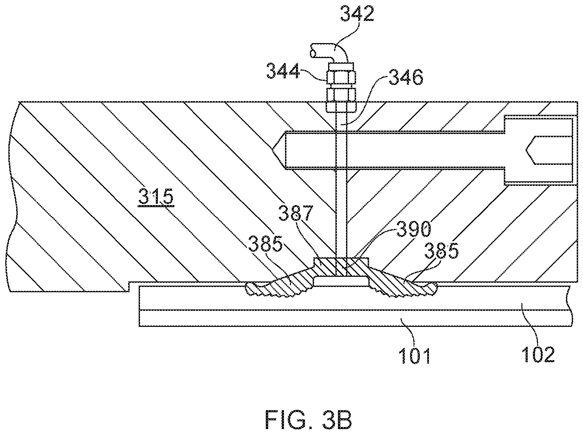

The first (or primary) sealing ring 355 and second (that is to say secondary) sealing ring 360 have a similar inner diameter and radius but, as illustrated in Figure 3 may not be identical. Rather an abutment end of one may be larger and have a different shape to the other. Each has a block like abutment end from which a sealing lip extends. The lip is tapered. Aptly the lip is wedge like. Aptly the lip has a serrated inner surface. The inner port 350 can be used as a test port or as a hydrostatic pressure communicating port. That is to say if a test pressure is applied locally at the external port 330 or if a hydrostatic pressure is applied locally at the external port 330 then this pressure is communicated inside the end fitting via the fluid communication passageway. This passageway is provided by the bore 332 in the flange 322 and the connecting tube 340 and the bore 346 in the open mouthed end of the end fitting body. Thus a corresponding test pressure or hydrostatic pressure is experienced at the internal port 350 on the inner surface of the end fitting body. When a test pressure is applied locally at the external port 330 the applied pressure is used to verify that the primary and secondary seals have been correctly energised during manufacturing. This can be achieved by applying a test pressure and then monitoring any degradation in the applied pressure for a predetermined period of time. Such degradation in pressure indicates one or more leak paths which permit pressure in the fluid communication passageway to escape. This helps test seal integrity of the seals that are created. During an in service lifetime of the flexible pipe body and end fitting the local hydrostatic pressure is continually applied at the external port 330. In the circumstances where the flexible pipe is put into service in deep or ultra deep water environments the local pressure at the external port 330 can be in the range of about around 9652.66 to 34473.79 kPa (1400 to 5000 psi) or more. This pressure is constantly applied via the fluid communication passageway to the internal port 350 between the sealing rings. As a result the primary sealing ring 355 experiences a reduced pressure difference across it. That is to say one side of the primary sealing ring 355 experiences a bore pressure whilst a remaining side of the primary sealing ring 355 experiences the local hydrostatic pressure. By way of example, where a bore pressure is 137895.15 kPa (20,000 psi) and a local hydrostatic pressure is 20684.27 kPa (3000 psi) the primary seal sees only a difference of 117210.87 kPa (17,000 psi). This is in contrast to a primary seal ring in a conventional situation where local hydrostatic pressure is not communicated to one side of the seal ring which thus experiences a greater 137895.15 kPa (20,000 psi) difference.

The duel sealing ring technique allows a high test pressure or hydrostatic pressure to be communicated to one side of a primary seal ring without that pressure being communicated to a pipe annulus.

Figure 3B illustrates an alternative arrangement whereby hydrostatic pressure is communicated to a position behind and between a double seal provided by a single double facing sealing ring 380. Such a ring is formed as an integral piece with two opposed lips 385 extending from a central body region 387. The sealing ring 380 has a generally open V-shape which is energised from both sides to create a double seal. Optionally one or more small holes 390 are formed at an apex region of the sealing ring 380 to allow hydrostatic pressure to be communicated from the bore 346 past the seal to the void space created between the two sealing areas and the underlying barrier layer 102.

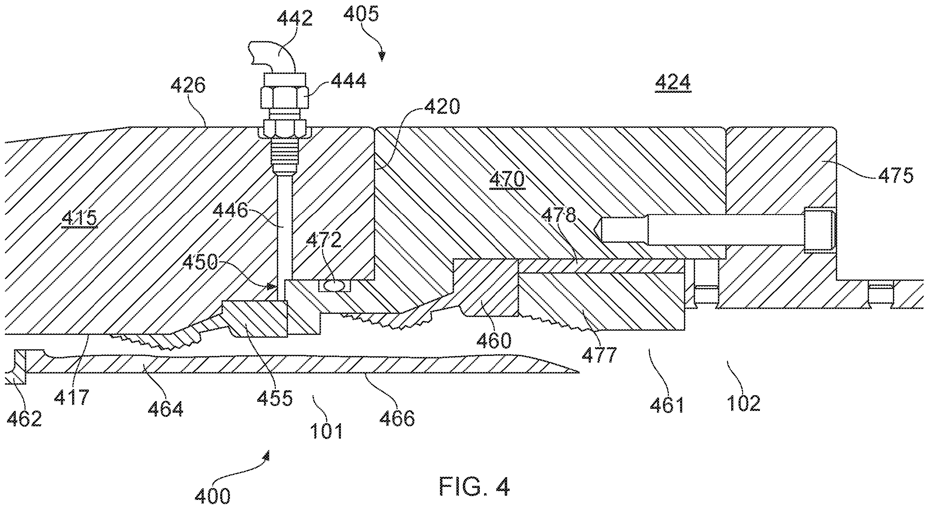

Figure 4 illustrates how an end 400 of a segment of flexible pipe body is terminated in an alternative end fitting 405. The end fitting 405 includes an end fitting jacket 410 (not shown) which is securable to an end fitting body 415. The end fitting body 415 defines an open mouth in which the end 400 of the flexible pipe body is received. As illustrated in Figure 4 an inner surface 417 of the end fitting body 415 has a stepped cross section which generally widens towards a pipe facing end 420 of the end fitting body 415. The inner surface faces layers of the flexible pipe body when the body is terminated in the end fitting. An outer surface of the end fitting body 415 extends from the pipe facing an open mouthed end 420 of the end fitting body to a flange 422 (not shown) which extends radially outwardly from a central region of the end fitting body 415. The flange part 422 of the end fitting body is secured to an end of the jacket 410 by conventional techniques such as via bolts, threaded connections or the like. When so secured a space 424 is provided between the jacket and the end fitting body 415 in which armour wires 426 of the flexible pipe body can be terminated. Aptly the space 424 is filled with an epoxy during a manufacturing step during which flexible pipe body is terminated in the end fitting 405. An external port 430 (not shown) is provided on an outwardly facing surface 431 of the end fitting body. The outwardly facing surface is a part of the end fitting that experiences local hydrostatic pressure in use. Other such surfaces are the outer cylindrical surface and end fitting connector at the remaining end region of the end fitting body. As per the end fitting illustrated in Figure 3A a through bore 432 extends through the flange part 422 of the end fitting body to a tube connector 434 which connects a further end of the bore 432 that is spaced apart from the port 430 to a pressure resistant tube 440. The pressure resistant tube 440 helps provide a passageway that is collapse resistant at high pressures. That is to say when fluid at high pressure is in the tube 440 the walls of the tube do not collapse or burst. Likewise bores in the end fitting body do not collapse or burst.

A further end 442 of the tube is connected to a further tube connector 444 which connects the tube to an end of another bore 446 which extends through the end fitting body. This bore 446 extends radially outwardly from the inner surface of the end fitting body 415 to an outer surface of the end fitting body that faces the inside of the jacket. A remaining end of the bore 446 through the end fitting body 415 near the open mouthed end 420 defines an inner port 450. This inner port 450 is located at a position between a primary seal ring 455 and a secondary seal ring 460 which each seal against a respective but different fluid retaining layer of the flexible pipe body. By contrast to the end fitting illustrated in Figure 3A the seal rings of the end fitting illustrated in Figure 4 do not seal against a common layer. Rather one sealing ring seals against an outer surface of one layer and a further seal ring seals against an outer surface of another layer. For example as illustrated in Figure 4 the primary seal ring 455 may seal against an outer surface of a barrier layer whilst a secondary seal ring 460 seals against an outer surface of an overlying sacrificial layer 461.

During a termination process in which an end of a segment of flexible pipe body is terminated in the end fitting 405 a carcass latch ring 462 and inner sleeve 464 are located with respect to a carcass 101, sacrificial layer 466 and barrier layer 102. During the termination process the primary seal ring 455 is energised against the outer surface of the barrier layer 102 by securing an inner collar 470 against the end 420 of the end fitting body 415. An "O" ring 472 helps create a seal at an interface between the inner collar member 470 and the end fitting body 415. Subsequently the secondary seal ring 460 is energised by securing a pressure armour collar 475 to the inner collar member 470 which action urges a pressure armour termination ring 477 and corresponding spacer ring 478 against an abutment end of the secondary seal ring 460. This process urges the secondary seal ring 460 against the outer surface of the sacrificial layer 461.

As with the end fitting shown in Figure 3A, the end fitting illustrated in Figure 4 allows a locally applied test pressure or local hydrostatic pressure to be communicated as desired to a location between seal rings. Applying a test pressure enables sealing elements to be tested during a termination process in which an end of flexible pipe body is terminated in an end fitting. Alternatively a test pressure can be applied at any stage subsequent to manufacture. For example subsequent to the elapse of a period of time in which manufactured flexible pipe is stored. Alternatively in use, after installation at a subsea location, a fluid communication passageway provided by an external port, bore, tube, bore and port can be used to constantly communicate a local pressure to the location between the seal rings. This pressure can be a pressure generated by a head of water at a depth where the flexible pipe and end fitting is submerged. Aptly in service the pressure generated by the head of water is transmitted through the communication pathway without valves or other impedance. In this way not only does the seawater communicate in to the inner port 450 between the primary seal 455 and the secondary seal 460 but also gas which has permeated through the barrier layer 102 into the void space between the barrier layer 102 and the overlying seal layer 461 may escape out from the end fitting through the same high pressure communication pathway (overcoming the local hydrostatic pressure).

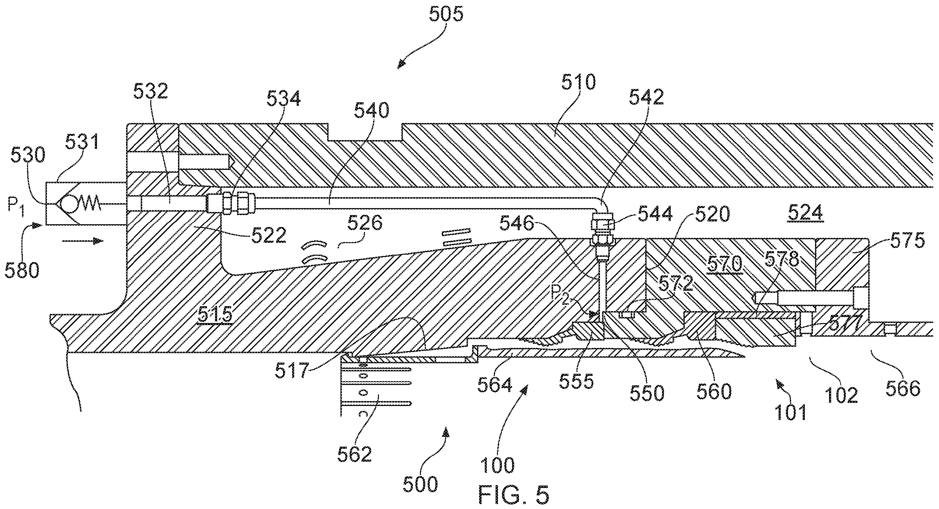

Figure 5 illustrates how an end 500 of a segment of flexible pipe body 100 is terminated in an end fitting 505. As illustrated in Figure 5 the end fitting 505 includes an end fitting jacket 510 which is securable to an end fitting body 515. The end fitting body 515 is a unitary piece which has a first end region that defines an open mouth in which the end 500 of the flexible pipe body is received. As illustrated in Figure 5 an inner surface 517 of the end fitting body 515 has a stepped cross section which generally widens towards a pipe facing end 520 of the end fitting body 515. The inner surface faces layers of the flexible pipe body when the pipe body is terminated in the end fitting. An outer surface of the end fitting body 515 extends from the pipe facing and open mouthed end 520 of the end fitting body to a flange 522 which extends radially outwardly from a central region of the end fitting body 515. The flange part 522 of the end fitting body is secured to an end of the jacket 510 by conventional techniques (such as bolts or threaded connections or the like). When so secured a space 524 is provided between the jacket and the end fitting body 515 in which armour wires 526 of the flexible pipe body can be terminated. Aptly the space 524 is filled with an epoxy during a manufacturing step during which the flexible pipe body is terminated in the end fitting 505. As illustrated in Figure 5 an external port 530 is provided on an outwardly facing surface 531 of a valve. A through bore 532 extends away from the external port 530 through the flange part 522 of the end fitting body to a tube connector 534 which connects a further end of the bore 532 that is spaced apart from the external port 530 in the valve to a pressure resistant tube 540. The pressure resistant tube 540 helps provide a passageway that is collapse and burst resistant at high pressures. That is to say when fluid at high pressure is in the tube 540 the walls of the tube do not collapse or burst. Likewise the bores in the end fitting body do not collapse or burst. Aptly the tube is a stainless steel tube. Aptly the tube is manufactured using corrosion resistant material. Aptly the bores in the end fitting body are lined or clad with a corrosion resistant material. Aptly the walls of the tube 340 are pressure resistant to a pressure of 9652.66 kPa (1400 psi) or more. Aptly the walls of the tube 340 are pressure resistant to a pressure of 20684.27 kPa (3000 psi) or more. Aptly the walls of the tube 340 are pressure resistant to a pressure of 27579.03 kPa (4000 psi) or more. Aptly the walls of the tube 340 are pressure resistant to a pressure of 34473.79 kPa (5000 psi) or more.

A further end 542 of the tube is connected to a further tube connector 544 which connects the tube to an end of another bore 546 that extends through the end fitting body. This bore 546 extends radially outwardly from the inner surface of the end fitting body 515 to an outer surface of the end fitting body that faces the inside of the jacket.

A remaining end of the bore 546 that passes through the end fitting body 515 near the open mouthed end 520 defines an inner port 550. This inner port 550 is located at a position between a primary seal ring 555 and a secondary seal ring 560 which, in the example shown, seal against a common fluid retaining layer of the flexible pipe body.

During a termination process in which an end of a segment of flexible pipe body is terminated in the end fitting 505 a carcass latch ring 562 and inner sleeve 564 are located with respect to a carcass 101, sacrificial layer 566 and a barrier layer 102. The seal rings 555, 560 thus bear on a radially outer surface of the barrier layer 102. During the termination process the primary seal 555 is energised against the outer surface of the barrier layer 102 by securing an inner collar member 570 against the end 520 of the end fitting body 515. An "O" ring 572 helps create a seal at an interface between the inner collar member 570 and the end fitting body 515. Subsequently the secondary seal ring 560 is energised by securing a pressure armour collar 575 to the inner collar member 570 which action urges a pressure armour termination ring 577 and corresponding spacer ring 578 against an abutment end of the secondary seal ring 560. This process urges the secondary seal ring 560 against the outer surface of the barrier layer 102.

The inlet valve 580 is a one way valve that has a closed state and an open state. In the closed state the valve blocks any fluid flow through the bore 532 in the end fitting body 515 and the external port 530. In an open state local external pressure P₁, which may be a hydrostatic pressure is fluidically communicated via the external port 530 along the fluid communication passageway to the internal port 550. Aptly the valve 580 is a high pressure ball valve. The valve is designed and manufactured to open at a respective predetermined pressure. Aptly the predetermined opening pressure of the valve is a pressure associated with a particular depth of water in which the end fitting and flexible pipe is submerged. Aptly the open pressure threshold is 1378.95 kPa (200 psi) or more. Aptly the open pressure is 500 psi or more. Aptly the open pressure is 6894.76 (1000 psi) or more. In this way when the flexible pipe is installed at a desired subsea location, fluid pressure is not communicated to the internal port 550 until the flexible pipe is submerged at a predetermined water depth. At that predetermined point in time corresponding to the end fitting, carrying the valve 580, being at a predetermined water depth, the valve 580 opens and the local hydrostatic pressure is communicated to the internal port 550. It will be appreciated that one or more externally located inlet ports 530 of respective inlet valves and corresponding fluid communication passageways may be provided in each end fitting. Aptly multiple external inlet ports and corresponding fluid communication passageways are included in the end fitting with a corresponding number of internal ports 550. Aptly the inlet ports, valves, fluid communication passageways and internal ports are arranged circumferentially around the end fitting.

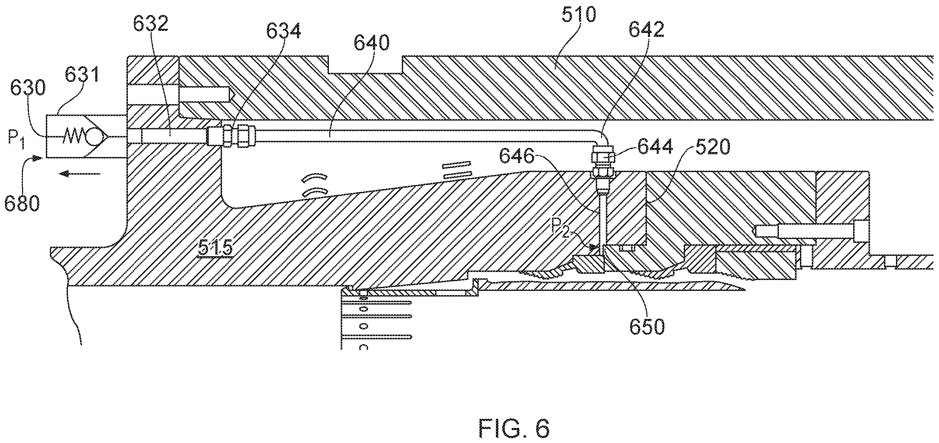

Figure 6 illustrates a cross section through a part of the end fitting shown in Figure 5 and illustrates how in addition to inlet valves and inlet passageways an end fitting 505 can include one or more external exit ports 630 (one shown in Figure 6). The exit port is formed in an outer surface 631 of an exit valve. A corresponding through bore 632 extends through the flange part 522 of the end fitting body to a tube connector 634 which connects a further end of the bore 632 that is spaced apart from the exit port 630 to a pressure resistant tube 640. The pressure resistant tube 640 helps provide a passageway that is collapse and burst resistant at high pressures. That is to say when fluid at a high pressure is in the tube 640 the walls of the tube do not collapse or burst. Likewise the bores in the end fitting body do not collapse or burst. Aptly the tube is a stainless steel tube. Aptly the tube is manufactured using corrosion resistant material. Aptly the bores in the end fitting body are lined or clad with a corrosion resistant material. Aptly the walls of the tube 340 are pressure resistant to a pressure of 9652.66 kPa (1400 psi) or more. Aptly the walls of the tube 340 are pressure resistant to a pressure of 20684.27 kPa (3000 psi) or more. Aptly the walls of the tube 340 are pressure resistant to a pressure of 27579.03 kPa (4000 psi) or more. Aptly the walls of the tube 340 are pressure resistant to a pressure of 34473.79 kPa (5000 psi) or more.

A further end 642 of the tube is connected to a further tube connector 644 which connects the tube to an end of another bore 646 through the end fitting body. This bore 646 extends radially outwardly from the inner surface of the end fitting body 515 to an outer surface of the end fitting body that faces the inside of the jacket.

A remaining end of the bore 646 through the end fitting body 515 near the open mouthed end 520 defines an inner port 650. This inner port 650 is located at a position between a primary seal ring 555 and a secondary seal ring 560 which seal against a fluid retaining layer of the flexible pipe body.

The valve 680 associated with the exit port 630 and the exit passageway provided by the through bore 632 in the flange of the end fitting body 515 is a one way valve. The exit valve 680 has an open state and a closed state. In the closed state fluid, and thus pressure, communication does not occur between the exit port 630 on the outer surface 631 of the exit valve 680 and the inner port 650. In the open state a build-up of internal pressure P₂ at the region around the inner port 650 is released outwardly via the exit port 630 into a surrounding region. Aptly the exit valve 680 is a high pressure ball valve. The exit valve 680 opens when a local pressure P₁ external to the end fitting is no longer high enough to force the valve into a closed state. This results in the valve being open until it is submerged at a predetermined depth of seawater. At the predetermined depth a pressure exerted by the local hydrostatic pressure P₁ reaches the predetermined threshold pressure for the valve which thus closes. The depth at which the valve changes state from open to closed and from closed to open may optionally be the same as when the inlet valve 580 discussed with respect to Figure 5 changes state. Aptly the inlet valves open at a lower hydrostatic pressure than the exit valves open.

By way of example the pressure control valve 580 may be set, for example, to open when the external pressure P₁, or a test pressure P₃ applied to the external side of the pressure control valves, is greater than or equal to 1400 kPa (14 bar/200 psi). The pressure control exit valve 680 is a one-way valve which opens where P₂ is greater than P₁ (or is greater than an applied test pressure P₃ on the external side of the pressure control exit valve 680). That is to say when a pressure P₂ in an annulus region between the opposed seal rings 555, 560 (and which is communicated via the internal fluid communication pathway), is greater than the external pressure P₁ the pressure control exit valve opens. During end fitting and prior to installation the external pressure P₁ is 101.33 kPa (1 atm/1 bara). Thus P₁ is equal to P₂ and the inlet valve 580 is closed and the exit valve 680 is closed. When a test pressure P₃ is applied to the inlet valve 580 to test the seals (and for the purpose of the test the same test pressure is applied to the exit valve 680) the inlet valve opens and P₂ is equal to P₃. With the annulus region between the opposed seal rings 555, 560 pressurised the normal pipe FAT test pressure cycle can be performed in the bore of the pipe, providing confirmation of the differential pressure containment across the inner seal ring required by the pipe in service. When the test pressure P₃ is removed at the external valves the inner annulus pressure P₂ is greater than the external pressure P₁ and therefore the valve 680 opens to release the pressure P₂ in the annular region until P₂ = P₁ again at which point the valve 680 closes again. By contrast, when the pipe is installed P₁ increases with water depth and the external pressure P₁ is greater than the pressure in P₂ in the annular region until the set differential pressure is reached (e.g. 1400 kPa/14 bara/200 psi) at which point in time the inlet valve 580 opens (the valve 680 remains closed). The external pressure P₁ and the pressure P₂ in the annular region are equalised as a result of the opening of the valve 580. If the pipe is recovered the valve 580 closes and so P₂ becomes greater than the external pressure P₁ as the end fitting rises through the water column. Because the internal pressure P₂ is now greater than the external pressure P₁ the valve 680 opens and the pressure at the openings 550, 650 in the annular region is released again until the internal pressure P₂ is equal to the external pressure P₁.

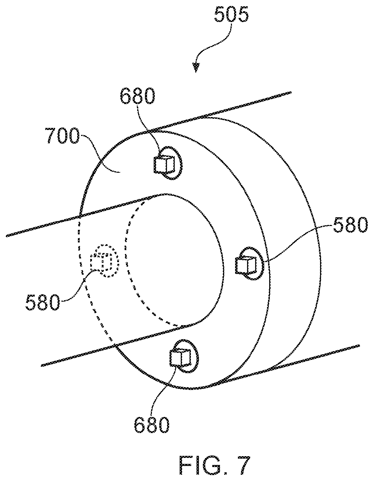

Figure 7 helps illustrate how inlet and outlet valves 580, 680 can be arranged circumferentially around an external back surface 700 of the flange part of the end fitting 505 in more detail. As illustrated in Figure 7 two inlet valves 580 and two exit valves 680 may be arranged substantially opposite each other. It will be appreciated that other numbers of inlet and outlet valves and corresponding passageways and ports can be utilised according to certain embodiments of the present invention. The number of inlet valves/ports does not have to equal the number of exit valves/ports.

Aptly, according to certain embodiments of the present invention the pressure at the external port may be communicated directly or indirectly. That is to say fluid may be allowed to flow throughout the passageway or alternatively part or parts of the passageway may be filled with a pressure communicating fluid such as a grease or hydraulic oil or the like. Aptly different regions of the fluid communication passageway contain different fluid communicating fluids which are separated as required by one or more filters able to communicate pressure but which constrain flow of different fluids across an interface region.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification.

## Claims

1. An end fitting (305, 405, 505) for a flexible pipe for transporting production fluids, comprising:
an end fitting body (315) comprising a first end region that provides an end fitting connector and a further end region (320, 420, 520) that provides an open mouth for receiving a flexible pipe body end (300); and
an end fitting jacket (310, 410, 510) secured to the end fitting body; wherein
the end fitting body (315) further comprises at least one external port (330, 430, 530, 630) of the end fitting located on an outwardly facing surface (331, 341, 531, 631) of the end fitting body (315) for receiving a local hydrostatic pressure exerted by a surrounding body of seawater in use, at least one corresponding inner port (350, 450, 550, 650) located on an inwardly facing surface of the end fitting body (315) and a corresponding fluid communication passageway (340, 440, 540, 640), pressure resistant to at least about around 9652.67 kPa (1400 psi), extending between the external port (330, 430, 530, 630) and the inner port (350, 450, 550, 650) for communicating pressure between said external port (330, 430, 530, 630) and said inner port (350, 450, 550, 650), wherein said fluid communication passageway comprises at least one lumen (340, 440, 540, 640) connected between a first bore (346, 446, 546, 646) in the end fitting body extending between a first lumen end and the inner port, and a further bore (332, 432, 532, 632) in the end fitting body extending between a further lumen end and the external port, wherein the first bore extends radially outwardly from an inner surface of the end fitting body to an outer surface of the end fitting body that faces an inside of the jacket, said inner port (350, 450, 550, 650) being located at a location between a pair of spaced apart seal elements (355, 360, 455, 460, 555, 560) sealed against at least one internal fluid retaining layer of a flexible pipe body.

2. The end fitting (305, 405, 505) as claimed in claim 1 wherein said at least one external port (330, 430, 530, 630), at least one corresponding inner port and corresponding fluid communication passageway (340, 440, 540, 640), comprises:
at least one external inlet port (530), in fluid communication with a corresponding inner port (550) via a corresponding inlet passageway (532), that selectively permits fluid at a local pressure to enter the inlet port (530) from outside the end fitting (305, 405, 505); and
at least one external exit port (630), in fluid communication with a corresponding inner port (650) via a corresponding exit passageway (632), that selectively permits fluid at an internal pressure to exit the exit port (630) from said a location.

3. The end fitting (305, 405, 505) as claimed in claim 2, further comprising:
a one way inlet valve (580) at each external inlet port (530) for selectively opening when a local pressure at the external inlet port (530) is at a first predetermined threshold pressure; and
a one way exit valve at each external exit port (630) for selectively opening when a local pressure at the external exit port (630) is at a second predetermined threshold pressure.

4. A flexible pipe for transporting production fluids, comprising: a segment of flexible pipe body (100) comprising a first pipe body end and a further pipe body end; and, at least one end fitting (305, 405, 505) as claimed in any one of claims 1 to 3.

5. The flexible pipe as claimed in claim 4, further comprising:
the at least one internal fluid retaining layer is a barrier layer (102) or liner of the flexible pipe body (100).

6. The flexible pipe as claimed in claim 4, further comprising:
the at least one internal fluid retaining layer is an intermediate layer between a barrier layer (102) or liner and an outer sheath (108) of the flexible pipe body (100).

7. The flexible pipe as claimed in claim 4, further comprising:
the at least one internal fluid retaining layer comprises a barrier layer (102) or liner and an intermediate layer configured between the barrier layer (102) or liner and an outer sheath (108) of the flexible pipe body (100).

8. The flexible pipe as claimed in any preceding claim, further comprising:
a respective valve (580, 680) for selectively opening and closing each external port (330, 430, 530, 630).

9. The flexible pipe as claimed in claim 8 wherein each valve (580, 680) is a one way valve.

10. The flexible pipe as claimed in any one of claims 4 to 7 wherein said at least one external port (300, 430, 530, 630) and corresponding fluid communication passageway (340, 440, 540, 640) further comprises:
at least one external inlet port (530), and a corresponding inlet passageway (532), that selectively permits fluid at a local pressure to enter the inlet port (530) from outside the end fitting (305, 405, 505); and
at least one external exit port (630), and a corresponding exit passageway (632), that selectively permits fluid at an internal pressure to exit the exit port (630) from said a location.

11. The flexible pipe as claimed in claim 10, further comprising:
a one way inlet valve (580) at each inlet port (530) for selectively opening when a local pressure at the inlet port (530) is at a first predetermined threshold pressure; and
a one way exit valve (680) at each exit port (630) for selectively opening when a local pressure at the exit port (630) is at a second predetermined threshold.

12. A method of testing at least one seal in an end fitting (305, 405, 505), as claimed in any one of claims 1 to 11, of a flexible pipe, comprising the steps of:
subsequent to at least one of a first and further pipe body end of a segment of flexible pipe body (100) being terminated in a respective end fitting (305, 405, 505) comprising an end fitting body and an end fitting jacket secured to the end fitting body, applying a test pressure at at least one external port (330, 430, 530, 630) of at least one end fitting (305, 405, 505); and
communicating the test pressure, via a fluid communication passageway (340, 440, 540, 640) that is pressure resistant to at least about around 9652.67 kPa (1400 psi), from said external port (330, 430, 530, 630) to an inner port located at a location between a pair of spaced apart seal elements (355, 360, 455, 460, 555, 560) sealed against at least one internal fluid retaining layer of the flexible pipe, said fluid communication passageway comprising at least one lumen (340, 440, 540, 640) connected between a first bore (346, 446, 546, 646) in an end fitting body extending between a first lumen end and said inner port, and a further bore (332, 432, 532, 632) in the end fitting body extending between a further lumen end and said external port, wherein the first bore extends radially outwardly from an inner surface of the end fitting body to an outer surface of the end fitting body that faces an inside of the jacket.

13. The method as claimed in claim 12, further comprising the steps of:
applying the test pressure to said a location via at least one inlet valve (580) of an external inlet port (530) of the end fitting (305, 405, 505).

14. The method as claimed in claim 13, further comprising the steps of:
subsequently releasing test pressure from said a location via at least one exit valve (680) of an external exit port (630) of the end fitting (305, 405, 505).

## Patentansprüche

1. Endstück (305, 405, 505) für ein flexibles Rohr zum Transportieren von Förderfluid, umfassend:
einen Endstückkörper (315), umfassend einen ersten Endbereich, der einen Endstückverbinder bereitstellt, und einen weiteren Endbereich (320, 420, 520), der eine offene Mündung zum Aufnehmen eines flexiblen Rohrkörperendes (300) bereitstellt; und
eine Endstückummantelung (310, 410, 510), die an dem Endstückkörper befestigt ist; wobei der Endstückkörper (315) ferner mindestens einen externen Anschluss (330, 430, 530, 630) des Endstücks, der sich an einer nach außen gewandten Oberfläche (331, 341, 531, 631) des Endstückkörpers (315) befindet, zum Aufnehmen eines lokalen hydrostatischen Drucks, der bei Verwendung durch eine umgebende Masse von Meerwasser ausgeübt wird, mindestens einen entsprechenden Innenanschluss (350, 450, 550, 650), der sich an einer nach innen gewandten Oberfläche des Endstückkörpers (315) befindet, und einen entsprechenden Fluidkommunikationsdurchgang (340, 440, 540, 640) umfasst, der druckbeständig bis mindestens etwa 9652,67 kPa (1400 psi) ist, der sich zwischen dem externen Anschluss (330, 430, 530, 630) und dem Innenanschluss (350, 450, 550, 650) erstreckt, zum Kommunizieren von Druck zwischen dem externen Anschluss (330, 430, 530, 630) und dem Innenanschluss (350, 450, 550, 650), wobei der Fluidkommunikationsdurchgang mindestens ein Lumen (340, 440, 540, 640) umfasst, das zwischen einer ersten Bohrung (346, 446, 546, 646) in dem Endstückkörper, die sich zwischen einem ersten Lumenende und dem Innenanschluss erstreckt, und einer weiteren Bohrung (332, 432, 532, 632) in dem Endstückkörper, die sich zwischen einem weiteren Lumenende und dem externen Anschluss erstreckt, verbunden ist, wobei sich die erste Bohrung radial nach außen von einer Innenoberfläche des Endstückkörpers zu einer Außenoberfläche des Endstückkörpers erstreckt, die einer Innenseite der Ummantelung zugewandt ist, wobei sich der Innenanschluss (350, 450, 550, 650) an einer Stelle zwischen einem Paar von beabstandeten Dichtungselementen (355, 360, 455, 460, 555, 560) befindet, abgedichtet gegen mindestens eine interne Fluidrückhalteschicht eines flexiblen Rohrkörpers.

2. Endstück (305, 405, 505) nach Anspruch 1, wobei der mindestens eine externe Anschluss (330, 430, 530, 630), mindestens ein entsprechender Innenanschluss und ein entsprechender Fluidkommunikationsdurchgang (340, 440, 540, 640) umfassen:
mindestens einen externen Einlassanschluss (530), der über einen entsprechenden Einlassdurchgang (532) in Fluidkommunikation mit einem entsprechenden Innenanschluss (550) steht, der selektiv zulässt, dass Fluid bei einem lokalen Druck von außerhalb des Endstücks (305, 405, 505) in den Einlassanschluss (530) eindringt; und
mindestens einen externen Auslassanschluss (630), der über einen entsprechenden Auslassdurchgang (632) in Fluidkommunikation mit einem entsprechenden Innenanschluss (650) steht, der selektiv zulässt, dass Fluid bei einem internen Druck an dieser Stelle aus dem Auslassanschluss (630) austritt.

3. Endstück (305, 405, 505) nach Anspruch 2, ferner umfassend:
ein Einweg-Einlassventil (580) an jedem externen Einlassanschluss (530) zum selektiven Öffnen, wenn ein lokaler Druck an dem externen Einlassanschluss (530) einen ersten zuvor bestimmten Schwellendruck erreicht; und
ein Einwegauslassventil an jedem externen Auslassanschluss (630) zum selektiven Öffnen, wenn ein lokaler Druck an dem externen Auslassanschluss (630) einen zweiten zuvor bestimmten Schwellendruck erreicht.

4. Flexibles Rohr zum Transportieren von Förderfluid, umfassend: ein Segment eines flexiblen Rohrkörpers (100), umfassend ein erstes Rohrkörperende und ein weiteres Rohrkörperende; und mindestens ein Endstück (305, 405, 505) nach einem der Ansprüche 1 bis 3.

5. Flexibles Rohr nach Anspruch 4, ferner umfassend:
die mindestens eine interne Fluidrückhalteschicht ist eine Sperrschicht (102) oder Auskleidung des flexiblen Rohrkörpers (100).

6. Flexibles Rohr nach Anspruch 4, ferner umfassend:
die mindestens eine interne Fluidrückhalteschicht ist eine Zwischenschicht zwischen einer Sperrschicht (102) oder Auskleidung und einer Außenhülle (108) des flexiblen Rohrkörpers (100).

7. Flexibles Rohr nach Anspruch 4, ferner umfassend:
die mindestens eine interne Fluidrückhalteschicht umfasst eine Sperrschicht (102) oder Auskleidung und eine Zwischenschicht, die zwischen der Sperrschicht (102) oder Auskleidung und einer Außenhülle (108) des flexiblen Rohrkörpers (100) konfiguriert ist.

8. Flexibles Rohr nach einem der vorstehenden Ansprüche, ferner umfassend:
ein jeweiliges Ventil (580, 680) zum selektiven Öffnen und Schließen jedes externen Anschlusses (330, 430, 530, 630).

9. Flexibles Rohr nach Anspruch 8, wobei jedes Ventil (580, 680) ein Einwegventil ist.

10. Flexibles Rohr nach einem der Ansprüche 4 bis 7, wobei der mindestens eine externe Anschluss (300, 430, 530, 630) und der entsprechende Fluidkommunikationsdurchgang (340, 440, 540, 640) ferner umfassen:
mindestens einen externen Einlassanschluss (530) und einen entsprechenden Einlassdurchgang (532), der selektiv zulässt, dass Fluid bei einem lokalen Druck von außerhalb des Endstücks (305, 405, 505) in den Einlassanschluss (530) eindringt; und
mindestens einen externen Auslassanschluss (630) und einen entsprechenden Auslassdurchgang (632), der selektiv zulässt, dass Fluid bei einem internen Druck an dieser Stelle aus der Auslassöffnung (630) austritt.

11. Flexibles Rohr nach Anspruch 10, ferner umfassend:
ein Einwegeinlassventil (580) an jedem Einlassanschluss (530) zum selektiven Öffnen, wenn ein lokaler Druck an dem Einlassanschluss (530) einen ersten zuvor bestimmten Schwellendruck erreicht; und
ein Einwegauslassventil (680) an jedem Auslassanschluss (630) zum selektiven Öffnen, wenn ein lokaler Druck an dem Auslassanschluss (630) einen zweiten zuvor bestimmten Schwellenwert erreicht.

12. Verfahren zum Prüfen von mindestens einer Dichtung in einem Endstück (305, 405, 505), nach einem der Ansprüche 1 bis 11, eines flexiblen Rohrs umfassend die Schritte:
nachdem mindestens eines von einem ersten und weiteren Rohrkörperende eines Segments eines flexiblen Rohrkörpers (100) in einem jeweiligen Endstück (305, 405, 505) endet, umfassend einen Endstückkörper und eine an dem Endstückkörper befestigte Endstückummantelung, Anlegen eines Prüfdrucks an mindestens einem externen Anschluss (330, 430, 530, 630) von mindestens einem Endstück (305, 405, 505); und
Kommunizieren des Prüfdrucks über einen Fluidkommunikationsdurchgang (340, 440, 540, 640), der druckbeständig bis mindestens etwa 9652,67 kPa (1400 psi) ist, von dem externen Anschluss (330, 430, 530, 630) zu einem Innenanschluss, der sich an einer Stelle zwischen einem Paar von beabstandeten Dichtungselementen (355, 360, 455, 460, 555, 560) befindet, abgedichtet gegen mindestens eine interne Fluidrückhalteschicht des flexiblen Rohrs, der Fluidkommunikationsdurchgang umfassend mindestens ein Lumen (340, 440, 540, 640), das zwischen einer ersten Bohrung (346, 446, 546, 646) in einem Endstückkörper, der sich zwischen einem ersten Lumenende und dem Innenanschluss erstreckt, und einer weiteren Bohrung (332, 432, 532, 632) in dem Endstückkörper, der sich zwischen einem weiteren Lumenende und dem externen Anschluss erstreckt, verbunden ist, wobei sich die erste Bohrung radial nach außen von einer Innenoberfläche des Endstückkörpers zu einer Außenoberfläche des Endstückkörpers erstreckt, die einer Innenseite der Ummantelung zugewandt ist.

13. Verfahren nach Anspruch 12, ferner umfassend die Schritte:
Anlegen des Prüfdrucks an die Stelle über mindestens ein Einlassventil (580) eines externen Einlassanschlusses (530) des Endstücks (305, 405, 505).

14. Verfahren nach Anspruch 13, ferner umfassend die Schritte:
anschließendes Ablassen des Prüfdrucks von der einer Stelle über mindestens ein Auslassventil (680) eines externen Auslassanschlusses (630) des Endstücks (305, 405, 505).

## Revendications

1. Raccord d'extrémité (305, 405, 505) pour un tuyau flexible destiné à transporter des fluides de production, comprenant :
un corps de raccord d'extrémité (315) comprenant une première zone d'extrémité qui fournit un connecteur de raccord d'extrémité et une autre zone d'extrémité (320, 420, 520) qui fournit une embouchure ouverte destinée à recevoir une extrémité de corps de tuyau flexible (300) ; et
une chemise de raccord d'extrémité (310, 410, 510) fixée au corps de raccord d'extrémité ; dans lequel le corps de raccord d'extrémité (315) comprend en outre au moins un orifice externe (330, 430, 530, 630) du raccord d'extrémité situé sur une surface orientée vers l'extérieur (331, 341, 531, 631) du corps de raccord d'extrémité (315) destiné à recevoir une pression hydrostatique locale exercée par une masse d'eau de mer environnante pendant l'utilisation, au moins un orifice interne (350, 450, 550, 650) correspondant situé sur une surface orientée vers l'intérieur du corps de raccord d'extrémité (315) et un passage de communication fluidique (340, 440, 540, 640) correspondant, résistant à une pression d'au moins environ 9 652,67 kPa (1 400 psi), s'étendant entre l'orifice externe (330, 430, 530, 630) et l'orifice interne (350, 450, 550, 650) destiné à communiquer une pression entre ledit orifice externe (330, 430, 530, 630) et ledit orifice interne (350, 450, 550, 650), dans lequel ledit passage de communication fluidique comprend au moins un lumen (340, 440, 540, 640) relié entre un premier alésage (346, 446, 546, 646) dans le corps de raccord d'extrémité s'étendant entre une première extrémité de lumen et l'orifice interne, et un autre alésage (332, 432, 532, 632) dans le corps de raccord d'extrémité s'étendant entre une autre extrémité de lumen et l'orifice externe, dans lequel le premier alésage s'étend radialement vers l'extérieur à partir d'une surface interne du corps de raccord d'extrémité vers une surface externe du corps de raccord d'extrémité qui fait face à un intérieur de la chemise, ledit orifice interne (350, 450, 550, 650) étant situé au niveau d'un emplacement entre une paire d'éléments de joint (355, 360, 455, 460, 555, 560) espacés scellés contre au moins une couche de retenue de fluide interne du corps de tuyau flexible.

2. Raccord d'extrémité (305, 405, 505) selon la revendication 1, dans lequel ledit au moins un orifice externe (330, 430, 530, 630), au moins un orifice interne correspondant et un passage de communication fluidique
correspondant (340, 440, 540, 640), comprend :
au moins un orifice d'entrée (530) externe, en communication fluidique avec un orifice interne (550) correspondant par l'intermédiaire d'un passage d'entrée (532) correspondant, qui permet sélectivement à un fluide à une pression locale d'entrer dans l'orifice d'entrée (530) à partir de l'extérieur du raccord d'extrémité (305, 405, 505) ; et
au moins un orifice de sortie (630) externe, en communication fluidique avec un orifice interne (650) correspondant par l'intermédiaire d'un passage de sortie (632) correspondant, qui permet sélectivement à un fluide à une pression interne de sortir de l'orifice de sortie (630) à partir dudit emplacement.

3. Raccord d'extrémité (305, 405, 505) selon la revendication 2, comprenant en outre :
une valve d'entrée unidirectionnelle (580) au niveau de chaque orifice d'entrée (530) externe destinée à s'ouvrir sélectivement lorsqu'une pression locale au niveau de l'orifice d'entrée (530) externe se trouve à une première pression de seuil prédéterminée ; et
une valve de sortie unidirectionnelle au niveau de chaque orifice de sortie (630) externe destinée à s'ouvrir sélectivement lorsqu'une pression locale au niveau de l'orifice de sortie (630) externe se trouve à une seconde pression de seuil prédéterminée.

4. Tuyau flexible destiné à transporter des fluides de production, comprenant : un segment de corps de tuyau flexible (100) comprenant une première extrémité de corps de tuyau et une autre extrémité de corps de tuyau ; et, au moins un raccord d'extrémité (305, 405, 505) selon l'une quelconque des revendications 1 à 3.

5. Tuyau flexible selon la revendication 4, comprenant en outre :
l'au moins une couche de retenue de fluide interne est une couche barrière (102) ou un revêtement du corps de tuyau flexible (100).

6. Tuyau flexible selon la revendication 4, comprenant en outre :
l'au moins une couche de retenue de fluide interne est une couche intermédiaire entre une couche barrière (102) ou un revêtement et une gaine externe (108) du corps de tuyau flexible (100).

7. Tuyau flexible selon la revendication 4, comprenant en outre :
l'au moins une couche de retenue de fluide interne comprend une couche barrière (102) ou un revêtement et une couche intermédiaire conçue entre la couche barrière (102) ou le revêtement et une gaine externe (108) du corps de tuyau flexible (100).

8. Tuyau flexible selon l'une quelconque revendication précédente, comprenant en outre :
une valve (580, 680) respective destinée à ouvrir et fermer sélectivement chaque orifice externe (330, 430, 530, 630).

9. Tuyau flexible selon la revendication 8, dans lequel chaque valve (580, 680) est une valve unidirectionnelle.

10. Tuyau flexible selon l'une quelconque des revendications 4 à 7, dans lequel ledit au moins un orifice externe (300, 430, 530, 630) et un passage de communication fluidique (340, 440, 540, 640) correspondant comprend en outre :
au moins un orifice d'entrée (530) externe, et un passage d'entrée (532) correspondant, qui permet sélectivement à un fluide à une pression locale d'entrer dans l'orifice d'entrée (530) à partir de l'extérieur du raccord
d'extrémité (305, 405, 505) ; et
au moins un orifice de sortie (630) externe, et un passage de sortie (632) correspondant, qui permet sélectivement à un fluide à une pression interne de sortir de l'orifice de sortie (630) à partir dudit emplacement.

11. Tuyau flexible selon la revendication 10, comprenant en outre :
une valve d'entrée unidirectionnelle (580) au niveau de chaque orifice d'entrée (530) destinée à s'ouvrir sélectivement lorsqu'une pression locale au niveau de l'orifice d'entrée (530) se trouve à une première pression de seuil prédéterminée ; et
une valve de sortie unidirectionnelle (680) au niveau de chaque orifice de sortie (630) destinée à s'ouvrir sélectivement lorsqu'une pression locale au niveau de l'orifice de sortie (630) se trouve à un second seuil prédéterminé.

12. Procédé d'essai d'au moins un joint dans un raccord d'extrémité (305, 405, 505), selon l'une quelconque des revendications 1 à 11, d'un tuyau flexible, comprenant les étapes suivantes consistant à :
suite à au moins l'une d'une première et d'une autre extrémité de corps de tuyau d'un segment de corps de tuyau flexible (100) qui se termine par un raccord d'extrémité (305, 405, 505) respectif comprenant un corps de raccord d'extrémité et une chemise de raccord d'extrémité fixée au corps de raccord d'extrémité, appliquer une pression d'essai au niveau d'au moins un orifice externe (330, 430, 530, 630) d'au moins un raccord d'extrémité (305, 405, 505) ; et
communiquer la pression d'essai, par l'intermédiaire d'un passage de communication fluidique (340, 440, 540, 640) qui résiste à une pression d'au moins environ 9 652,67 kPa (1 400 psi), à partir dudit orifice
externe (330, 430, 530, 630) vers un orifice interne situé au niveau d'un emplacement entre une paire d'éléments de joint (355, 360, 455, 460, 555, 560) espacés scellés contre au moins une couche de retenue de fluide interne du tuyau flexible, ledit passage de communication fluidique comprenant au moins un lumen (340, 440, 540, 640) relié entre un premier alésage (346, 446, 546, 646) dans un corps de raccord d'extrémité s'étendant entre une première extrémité de lumen et ledit orifice interne, et un autre alésage (332, 432, 532, 632) dans le corps de raccord d'extrémité s'étendant entre une autre extrémité de lumen et ledit orifice externe, dans lequel le premier alésage s'étend radialement vers l'extérieur à partir d'une surface interne du corps de raccord d'extrémité vers une surface externe du corps de raccord d'extrémité qui fait face à un intérieur de la chemise.

13. Procédé selon la revendication 12, comprenant en outre les étapes consistant à :
appliquer la pression d'essai audit emplacement par l'intermédiaire d'au moins une valve d'entrée (580) d'un orifice d'entrée (530) externe du raccord d'extrémité (305, 405, 505).

14. Procédé selon la revendication 13, comprenant en outre les étapes consistant à :
libérer ensuite une pression d'essai à partir dudit emplacement par au moins une valve de sortie (680) d'un orifice de sortie (630) externe du raccord d'extrémité (305, 405, 505).
